(19) Europäisches Patentamt
European Patent Office
Office européen des brevets

(11) **EP 2 941 404 B1**

## (12) EUROPEAN PATENT SPECIFICATION

(45) Date of publication and mention
of the grant of the patent:
**18.09.2019 Bulletin 2019/38**

(21) Application number: **13803406.1**

(22) Date of filing: **27.11.2013**

(51) Int Cl.:
*C03C 1/00* (2006.01)     *C03C 3/00* (2006.01)
*C03C 4/00* (2006.01)     *C03C 4/10* (2006.01)
*C03C 21/00* (2006.01)     *G06F 3/042* (2006.01)
*F21V 8/00* (2006.01)

(86) International application number:
**PCT/US2013/072157**

(87) International publication number:
**WO 2014/085535 (05.06.2014 Gazette 2014/23)**

(54) **ELECTRONIC DEVICE WITH IR TOUCH SCREEN USING A LOW-FE-GLASS**

ELEKTRONISCHES GERÄT MIT IR-TOUCH-SCREEN EIN LOW-FE-GLAS VERWENDEND

L'APPAREIL ÉLÉCTRONIQUE COMPRENANT UN ÉCRAN TACTILE INFRAROUGE (IR) UTILISANT UN VERRE À FAIBLE TENEUR EN FE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2012 US 201261731671 P**

(43) Date of publication of application:
**11.11.2015 Bulletin 2015/46**

(73) Proprietor: **Corning Incorporated
Corning, New York 14831 (US)**

(72) Inventor: **KING, Jeffrey Stapleton
Menlo Park, California 94025 (US)**

(74) Representative: **Elkington and Fife LLP
Prospect House
8 Pembroke Road
Sevenoaks, Kent TN13 1XR (GB)**

(56) References cited:
**US-A- 4 341 873        US-A1- 2006 099 441
US-A1- 2009 202 808     US-A1- 2009 215 607
US-A1- 2009 278 448     US-A1- 2010 079 382
US-A1- 2011 045 961     US-A1- 2011 122 091
US-A1- 2011 273 906     US-A1- 2011 294 647
US-B2- 7 666 511        US-B2- 7 709 406**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**FIELD**

The present disclosure relates to optical touch screens, and in particular to glass materials for optical touch screen systems.

**BACKGROUND**

Touch-screen functionality is gaining wider use in mobile device applications, such as smart phones, e-book readers, laptop computers and tablet computers, and the resulting market for displays having touch-screen functionality is booming. In addition, large-format displays, such as for desktop computers and wall-mounted screens, are continuing to increase in size. This increase in display size is accompanied by an increase in the display cost when using a conventional touch-screen technology, such as projected capacitive touch (PCAP) technology.

Consequently, there is a need to minimize the overall thickness and weight of touch-screens for the wide range of applications, from the smallest hand-held devices to the largest displays. Moreover, there is also a need for touch-screens to have more robust functionality, such as improved touch position accuracy, fingerprint immunity and multi-touch capability. As a result, a variety of sensing techniques have been developed to enable displays to have touch-screen functionality. These techniques have further necessitated the development of new materials to fully realize the methods and obtain optimal efficiency and effectiveness.

**SUMMARY**

In one aspect there is disclosed a high optical transmittance glass for touch screen applications. The high optical transmittance glass is used for frustrated total internal reflectance (FTIR) -based methods to be used for touch screen applications. In some embodiments, the glass allows for the use of FTIR-based methods wherein the light used is in the ultraviolet, visible, or infrared region of the electromagnetic spectrum. In some embodiments, the glass allows for the use of FTIR-based methods wherein the light used is from 750 nm to 2500 nm.

In an embodiment the invention relates to an electronic devices utilizing a frustrated total internal reflection system to determine a touch event. The device comprises a high optical transmittance glass comprising less than 200 ppm $Fe_2O_3$; wherein the absorption coefficient of the glass is less than 2.0 $m^{-1}$ at 900 nm; and the absorption coefficient of the glass is less than 2.0 $m^{-1}$ from 400 to 800 nm. In some embodiments, the glass comprises less than 100 ppm $Fe_2O_3$. In some embodiments, the glass has a density of 2.45 $g/cm^3$ or greater. In some embodiments, the glass has fracture toughness of 0.7 MPa $m^{1/2}$ or greater. In some embodiments, the glass has Vickers hardness under 200 g load of 600 $kgf/mm^2$ or greater. In some embodiments, the glass has a shear modulus 30 GPa or greater. In some embodiments, the glass has a compressive stress of 600 MPa or greater. In some embodiments, the glass has a depth of layer of 10 um or greater. In some embodiments, the glass has a thickness of 2 mm or less. In some embodiments, the glass is ion exchanged. In some embodiments, the glass has a $\beta$-OH value of from 0.2 $mm^{-1}$ to 0.9 $mm^{-1}$. In some embodiments, the glass has an average surface roughness ($R_a$) of $\leq$20 Å, preferably $\leq$10 Å, wherein the glass sheet has not been polished. In some embodiments, the glass has a thickness below 3 mm, and the glass substrate has a curvature deformation, W, less than 0.5 micrometer/$cm^2$, as described by the equation $W=D/L^2$, wherein D is the maximum curvature of glass substrate in mm and L is the diagonal length of glass substrate in cm.

Additional features and advantages of the disclosure are set forth in the detailed description that follows, and in part will be readily apparent to those skilled in the art from that description or recognized by practicing the disclosure as described herein, including the detailed description that follows, the claims, and the appended drawings. The claims are incorporated into and constitute part of the Detailed Description set forth below.

**BRIEF DESCRIPTION OF THE DRAWINGS**

FIGURE 1 is a cross-sectional view of the transparent sheet of the touch-screen system according to the disclosure;

FIGURE 2 is the specific absorption spectra of $Fe^{3+}$ and $Fe^{2+}$ ions in $Na_2O$-CaO-MgO-$SiO_2$ glass;

FIGURE 3 is X-ray fluorescence data for Gorilla Glass® incorporating $SiO_2$ comprising 30-50 ppm $Fe_2O_3$, $Al_2O_3$ comprising 100 ppm $Fe_2O_3$, and MgO comprising 400 ppm $Fe_2O_3$.

FIGURE 4 is an illustration of waveguide attenuation coefficient measurement;

FIGURE 5 is a view of the waveguide attenuation coefficient measurement setup, showing (a) IR-absorbing border, (b) LEDs, and (c) measured positions of the (d) photodiode;

FIGURE 6 shows the absorption coefficients of two Gorilla Glass® samples. Samples were 10 mm x 20 mm x 50 mm blank with all sides polished;

FIGURE 7 is a comparison of absorption coefficients of 10 mm x 20 mm x 50 mm blanks with all sides polished from Samples A-G;

FIGURE 8 is data from waveguide attenuation coefficient measurements at 850 nm for a standard 1.1 mm thick Gorilla Glass®, sourced from Harrodsburg, KY (Graph "A") and for 0.7 mm thick "special" Gorilla Glass® sample, sourced from Japan and composed of low-iron components (Graph "B"). The resulting $\alpha_{wg}$'s from the slope of the linear fits are 9.6 m$^{-1}$ and 3.0 m$^{-1}$, respectively;

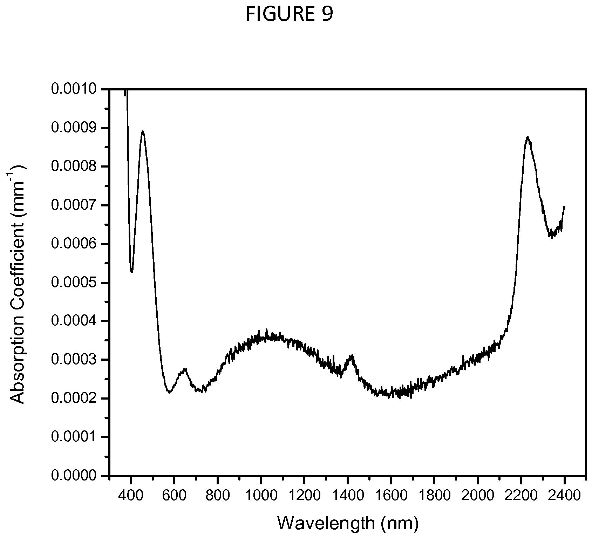

FIGURE 9 is the absorption coefficient of 10 mm x 20 mm x 50 mm blank with all sides polished from Sample G;

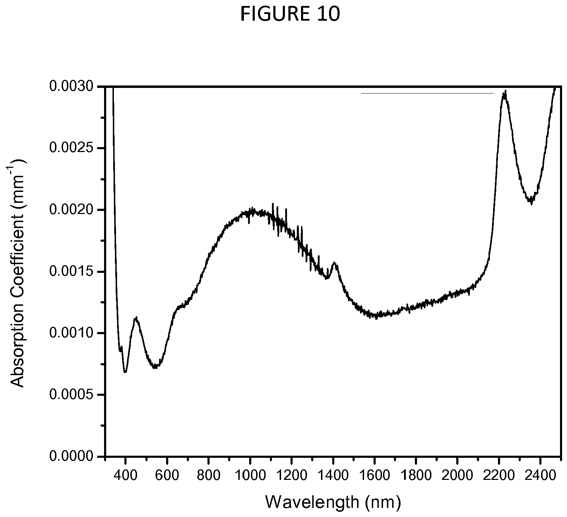

FIGURE 10 is the absorption coefficient of 10 mm x 20 mm x 50 mm blank with all sides polished from Sample A;

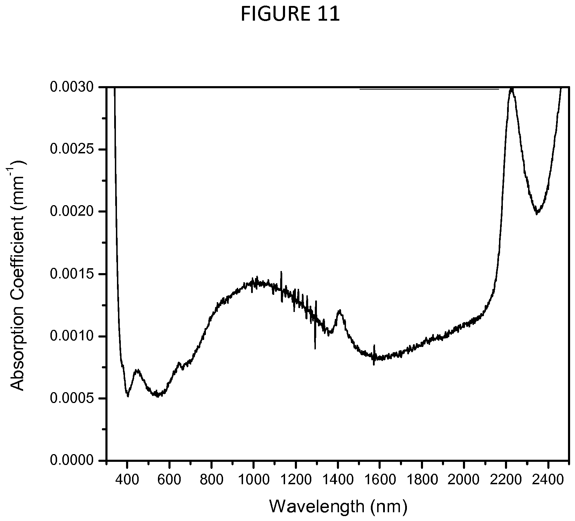

FIGURE 11 is the absorption coefficient of 10 mm x 20 mm x 50 mm blank with all sides polished from Sample B;

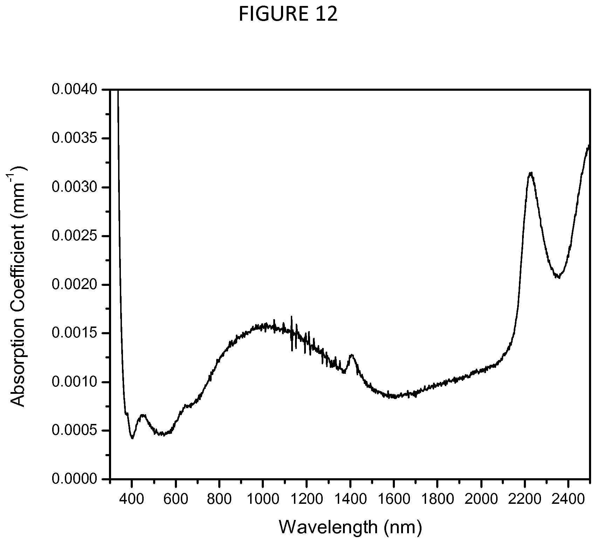

FIGURE 12 is the absorption coefficient of 10 mm x 20 mm x 50 mm blank with all sides polished from Sample C;

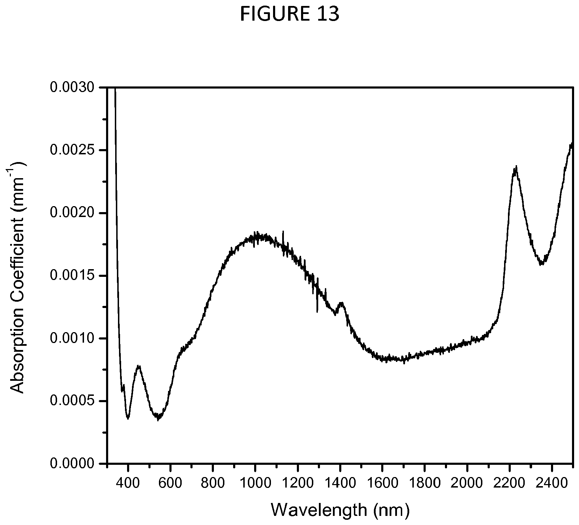

FIGURE 13 is the absorption coefficient of 10 mm x 20 mm x 50 mm blank with all sides polished from Sample D;

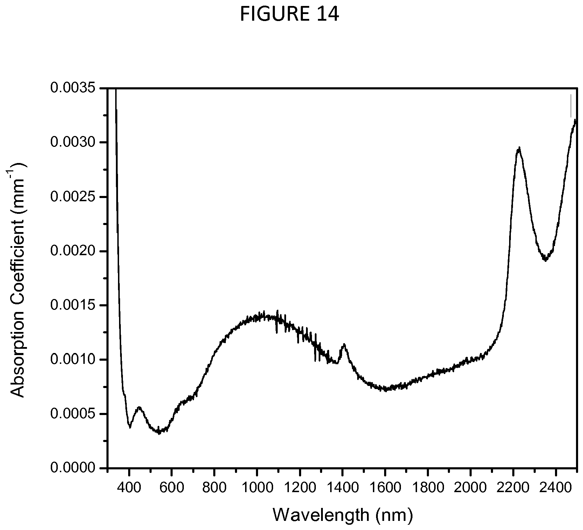

FIGURE 14 is the absorption coefficient of 10 mm x 20 mm x 50 mm blank with all sides polished from Sample E;

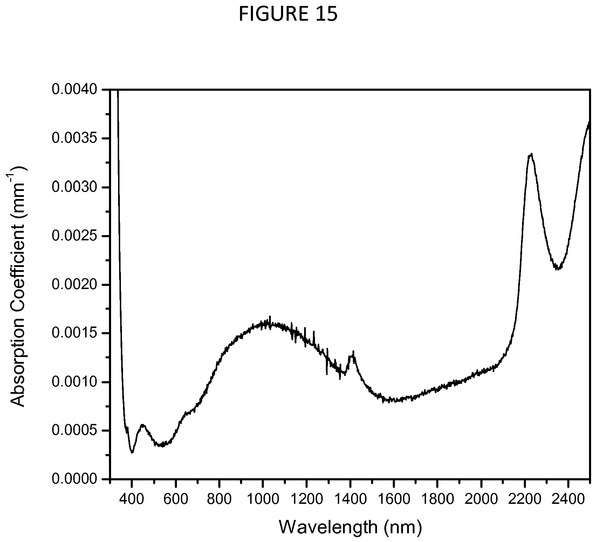

FIGURE 15 is the absorption coefficient of 10 mm x 20 mm x 50 mm blank with all sides polished from Sample F.

Additional features and advantages of the disclosure are set forth in the Detailed Description that follows and will be apparent to those skilled in the art from the description or recognized by practicing the disclosure as described herein, together with the claims and appended drawings.

## DETAILED DESCRIPTION

In the following detailed description, numerous specific details may be set forth in order to provide a thorough understanding of embodiments of the invention. However, it will be clear to one skilled in the art when embodiments of the invention may be practiced without some or all of these specific details. In other instances, well-known features or processes may not be described in detail so as not to unnecessarily obscure the invention. In addition, like or identical reference numerals may be used to identify common or similar elements. Moreover, unless otherwise defined, all technical and scientific terms used herein have the same meaning as commonly understood by one of ordinary skill in the art to which this invention belongs. In case of conflict, the present specification, including the definitions herein, will control.
Although other methods and can be used in the practice or testing of the invention, certain suitable methods and materials are described herein.
Disclosed are materials, compounds, compositions, and components that can be used for, can be used in conjunction with, can be used in preparation for, or are embodiments of the disclosed method and compositions. These and other materials are disclosed herein, and it is understood that when combinations, subsets, interactions, groups, etc. of these materials are disclosed that while specific reference of each various individual and collective combinations and permutation of these compounds may not be explicitly disclosed, each is specifically contemplated and described herein.
Thus, if a class of substituents A, B, and C are disclosed as well as a class of substituents D, E, and F, and an example of a combination embodiment, A-D is disclosed, then each is individually and collectively contemplated. Thus, in this example, each of the combinations A-E, A-F, B-D, B-E, B-F, C-D, C-E, and C-F are specifically contemplated and should be considered disclosed from disclosure of A, B, and/or C; D, E, and/or F; and the example combination A-D. Likewise, any subset or combination of these is also specifically contemplated and disclosed. Thus, for example, the sub-group of A-E, B-F, and C-E are specifically contemplated and should be considered disclosed from disclosure of A, B, and/or C; D, E, and/or F; and the example combination A-D. This concept applies to all aspects of this disclosure including, but not limited to any components of the compositions and steps in methods of making and using the disclosed compositions. Thus, if there are a variety of additional steps that can be performed it is understood that each of these additional steps can be performed with any specific embodiment or combination of embodiments of the disclosed methods, and that each such combination is specifically contemplated and should be considered disclosed.

Moreover, where a range of numerical values is recited herein, comprising upper and lower values, unless otherwise stated in specific circumstances, the range is intended to include the endpoints thereof, and all integers and fractions within the range. It is not intended that the scope of the invention be limited to the specific values recited when defining a range. Further, when an amount, concentration, or other value or parameter is given as a range, one or more preferred ranges or a list of upper preferable values and lower preferable values, this is to be understood as specifically disclosing all ranges formed from any pair of any upper range limit or preferred value and any lower range limit or preferred value, regardless of whether such pairs are separately disclosed.

The term "or", as used herein, is inclusive; more specifically, the phrase "A or B" means "A, B, or both A and B". Exclusive "or" is designated herein by terms such as "either A or B" and "one of A or B", for example.

The indefinite articles "a" and "an" are employed to describe elements and components of the invention. The use of these articles means that one or at least one of these elements or components is present. Although these articles are conventionally employed to signify that the modified noun is a singular noun, as used herein the articles "a" and "an" also include the plural, unless otherwise stated in specific instances. Similarly, the definite article "the", as used herein, also signifies that the modified noun may be singular or plural, again unless otherwise stated in specific instances.

For the purposes of describing the embodiments, it is noted that reference herein to a variable being a "function" of a parameter or another variable is not intended to denote that the variable is exclusively a function of the listed parameter or variable. Rather, reference herein to a variable that is a "function" of a listed parameter is intended to be open ended such that the variable may be a function of a single parameter or a plurality of parameters.

It is noted that terms like "preferably," "commonly," and "typically," when utilized herein, are not utilized to limit the scope of the claimed invention or to imply that certain features are critical, essential, or even important to the structure or function of the claimed invention. Rather, these terms are merely intended to identify particular aspects of an embodiment of the present disclosure or to emphasize alternative or additional features that may or may not be utilized in a particular embodiment of the present disclosure.

For the purposes of describing and defining the claimed invention it is noted that the terms "substantially" and "approximately" are utilized herein to represent the inherent degree of uncertainty that may be attributed to any quantitative comparison, value, measurement, or other representation. The terms "substantially" and "approximately" are also utilized herein to represent the degree by which a quantitative representation may vary from a stated reference without resulting in a change in the basic function of the subject matter at issue.

It is noted that one or more of the claims may utilize the term "wherein" as a transitional phrase. For the purposes of defining the present invention, it is noted that this term is introduced in the claims as an open-ended transitional phrase that is used to introduce a recitation of a series of characteristics of the structure and should be interpreted in like manner as the more commonly used open-ended preamble term "comprising."

As a result of the raw materials and/or equipment used to produce the glass composition of the present invention, certain impurities or components that are not intentionally added, can be present in the final glass composition. Such materials are present in the glass composition in minor amounts and are referred to herein as "tramp materials."

As used herein, a glass composition having 0 wt% of a compound is defined as meaning that the compound, molecule, or element was not purposefully added to the composition, but the composition may still comprise the compound, typically in tramp or trace amounts. Similarly, "sodium-free," "alkali-free," "potassium-free" or the like are defined to mean that the compound, molecule, or element was not purposefully added to the composition, but the composition may still comprise sodium, alkali, or potassium, but in approximately tramp or trace amounts.

Touch screens are becoming increasingly prevalent in both commercial and personal use, and there are many approaches for adding this functionality to smartphones, tablets, and larger displays. One such approach is a an optical touch screen based on Frustrated Total Internal Reflection (FTIR), which involves guiding electromagnetic radiation through a transparent material. Attenuation of the radiation by contact of an object with the surface of the material can be used to provide information related to such things as position and contact pressure. One example approach for utilizing FTIR in touch screen systems is LightTouch™, as described in US2011/0122091 A1, U.S. Appl. Nos. 13/686,571, 13/686,426, and U.S. Prov. Appl. Nos. 61/744,878, and 61/640,605.

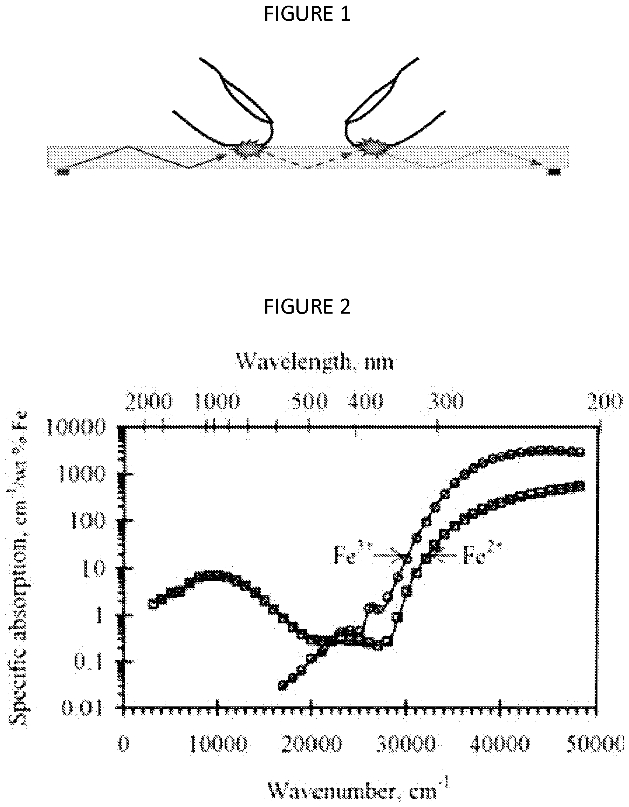

In an example design from LightTouch™, light emitting diodes (LEDs) and photodiodes are positioned around the perimeter of a sheet of transparent material, typically Gorilla Glass® (see U.S. Appl. No. 13/686,571). The light from the LEDs is launched into the sheet, and rays that meet the condition of total internal reflection propagate across the screen, as illustrated by FIGURE 1. When a finger or other suitable object touches the surface of the sheet, the propagating beam is attenuated due to the coupling of light from the guided mode to the contacting object. Touch sensing and correlation to position and/or pressure is accomplished by monitoring the photocurrents in photodiodes on opposite and adjacent edges of the sheet (*see, e.g.* U.S. Appl. Nos. 13/686,571, 13/686,426 and U.S. Prov. Appl. Nos. 61/640,605).

Optical losses in the transmission medium are primarily due to 1) scattering from imperfections and 2) absorption from compounds in the medium. This will, in turn, require more launching power, may increase noise, and/or cause lower signal on the receiving side, all undesirable from a practical point of design. In addition, since optical components are typically arranged around the perimeter of the screen, significant optical losses due to path length differences can result in large differences in signal strength between LEDs and photodiodes, putting greater demand on the dynamic range of the photodiode and associated electronics.

Absorption is a wavelength-dependent property, and silicate glasses typically have increased absorption in the near infrared (NIR) range used in many FTIR touch systems. Wavelengths from ~800 to 1000 nm are typically used to make the light invisible to the user and because of the abundance of low cost LEDs and photodiodes designed for this range. However, devices using the glass embodied herein may use any wavelength of electromagnetic radiation that provides for FTIR. In some embodiments, the wavelength of the electromagnetic radiation is from 350 nm to 25,000 nm. In some embodiments, the electromagnetic radiation is from 350 nm to 850 nm. In some embodiments, the electromagnetic radiation is from 750 nm to 2500 nm. In some embodiments, the electromagnetic radiation is from 800 nm to 1000 nm.

The aforementioned increased absorption typical in silicate glasses at wavelengths from 800 to 1000 nm (see FIGURE 2) is primarily due to the presence of a common impurity - iron. Fe in glass occurs as either $Fe^{2+}$ or $Fe^{3+}$. $Fe^{2+}$ has strong, broadband absorption centered at ~ 1000 nm, which tails off around 600 nm, as well as strong absorption below 400 nm. $Fe^{3+}$ is predominantly absorbing below 400 nm. Thus, for minimizing IR absorption for optical touch screens, it is desirable to either reduce the overall iron content of the glass to appropriate levels or to control the oxidation state such that the iron ions are mostly trivalent. The former approach is preferred because the latter is generally more difficult to achieve under normal industrial settings. For this study, it was assumed that the $Fe^{2+}/Fe^{3+}$ ratio remains constant. In some embodiments, the ratio of $Fe^{2+}/Fe^{3+}$ is 0:100, 10:90, 20:80, 30:70, 40:60, 50:50, 60:40, 70:30, 80:20, 90:10, or 100:0. In some embodiments, the ratio is 90% $Fe^{3+}$ for Gorilla®-type glasses. In other embodiments, the ratio is 0.4 to 0.55 for $Fe^{3+}$ for Gorilla®-type glasses.

For FTIR applications, the path length in the medium is quite long (hundreds of mm's), and thus transmission measurements made through the thickness of sheet glass (typically several mm's or less) typically do not provide sufficient resolution of potential attenuation problems. For example, in a 1 mm thick sheet of glass, a significant increase in the absorption coefficient from 1 $m^{-1}$ to 3 $m^{-1}$ results in a decrease in transmission of only 0.2%. In order to more accurately simulate the FTIR situation, measurement of the absorption coefficient based on a multiple path length transmission experiment can be used and provides more accurate results, and removes the need to account for Fresnel reflections.

A material's absorption coefficient, $\alpha$, is typically characterized by measuring absorbance for multiple paths on a polished rectangular cuboid. In some embodiments, 10 mm x 20 mm x 50 mm polished blocks were measured in a UV-Vis-NIR spectrometer. In this configuration, other than reflection losses at the two interfaces, the measured light propagates through the sample without further bounces or interaction with air/glass interfaces. Assuming negligible losses due to scattering, this results in a measurement of the fundamental absorption of the glass, a bulk material property. Absorption is described by the Beer-Lambert law:

$$I=I_o e^{-\alpha x}$$

where $I_o$ is the initial intensity, $\alpha$ is the absorption coefficient, and x is the distance from position $x_o$. Thus, taking transmission measurements for multiple path lengths allows one to calculate a, hence the 10 mm x 20 mm x 50 mm sample mentioned above.

However, for many applications, the FTIR touch screen is in a waveguide configuration, meaning the light bounces multiple times at the air/glass interface. For example, LightTouch™ is set up in a waveguide configuration. It is therefore practical to characterize the absorption losses in a like manner rather than via the straight-path method described above. The resulting data is a measurement of the attenuation coefficient, meaning it takes into account losses that result from the geometry and surface properties of the sample being measured. For clarity, this measurement is referred to as the waveguide attenuation coefficient, $\alpha_{wg}$. It should be expected that this technique will yield different results than the aforementioned measurements using collimated light and a polished optical block. In fact, in some embodiments, $\alpha_{wg}$ was found to be ~ $2\alpha$.

One aspect of the disclosure comprises a high optical transmittance glass for touch screen applications. The high optical transmittance glass allows for frustrated total internal reflectance (FTIR)-based methods to be used for touch screen applications.

A first aspect of the disclosure comprises high transmittance glass for touch screen applications comprising reduced imperfections. Imperfections include, but are not limited to, gaseous and solid inclusions, onclusions, adhesions, airlines, checks, cracks, extrusion, knots, pits, voids, particles, crystals, blisters, chips, cords, fractures, laps, seeds, stones, scratches, stains, and stria, and combinations thereof. In some embodiments, the number of imperfections is from 0.00001 to 10 imperfections per $cm^3$ wherein the size of the imperfection is less than 100, 50, 25, 10, 1, 0.5, 0.25, 0.1 $\mu$m along the axis of the longest dimension of the imperfection. In some embodiments, the number of imperfections is less than 0.00001, 0.00005, 0.0001, 0.0005, 0.001, 0.005, 0.01, 0.1, 0.5, 1, 2, 3, 4, 5 or 10 imperfections per $cm^3$ wherein the size of the imperfection is less than 100, 50, 25, 10, 1, 0.5, 0.25, 0.1 $\mu$m along the axis of the longest dimension of the imperfection. In some embodiments, wherein the imperfection comprises an inclusion, bubble, or airline, the number of imperfections is from 0.00001 to 10 imperfections per $cm^3$ the size of the imperfection is less than 100, 50, 25, 10, 1, 0.5, 0.25, 0.1 $\mu$m along the axis of the longest dimension of the imperfection.

In some embodiments, the reduction in imperfections is directed to imperfections that cause attenuation of electromagnetic radiation at the wavelength used for FTIR. In some embodiments, the reduction in imperfections is directed to imperfections that cause attenuation of light with a wavelength of from 750 to 2500 nm. In some embodiments, the size of the imperfections is smaller than the wavelength of the light used for FTIR. In some embodiments, the size of the imperfections is approximately equivalent (in some embodiments, approximately equivalent means $\pm$5, 10, 15, 20, or 25% of the average wavelength) than the wavelength of the light used for FTIR. In some embodiments, the size of the imperfections is larger than the wavelength of the light used for FTIR. In some embodiments, the scattering caused by the imperfections comprises Rayleigh scattering, Mie scattering or combinations thereof. In some embodiments, the particle size is controlled to limit either Rayleigh scattering, Mie scattering, or both Rayleigh and Mie scattering.

Another aspect comprises high transmittance glass for touch screen applications comprising a reduction in the concentration or amount of components that absorb at the wavelengths used in FTIR. In some embodiments, the components whose concentration is lowered comprise compounds comprising iron, magnesium, or aluminum. For example, the compounds can comprise, but are not limited to, iron oxide, $Fe_2O_3$, magnesium oxide, MgO, or aluminum oxide, $Al_2O_3$. The infrared spectra for various metal oxides can be found in D.W. Sheibley and M.H. Fowler, NASA Technical Note D-3750, Lewis Research Center, December 1966.

Some embodiments comprise a high transmittance glass for touch screen applications comprising low concentrations of iron. In some embodiments, reduction of iron content, typically measured as $Fe_2O_3$, can be accomplished by substitution of purer batch materials, including, in order of impact for some embodiments, $SiO_2$ (sand), $Al_2O_3$, and MgO. For example, in the glass compositions listed in the examples, sand makes up greater than 60 wt%.

Silica, $SiO_2$, an oxide involved in the formation of glass, functions to stabilize the networking structure of glass. In some embodiments, the glass composition comprises from 0 to 70 wt% $SiO_2$. In some embodiments, the glass composition comprises from 0 to 45 wt% $SiO_2$. In some embodiments, the glass composition can comprise from 35 to 45 wt% $SiO_2$. In some embodiments, the glass composition can comprise from 40 to 70 wt% $SiO_2$. In some embodiments, the glass composition can comprise from 50 to 70 wt% $SiO_2$. In some embodiments, the glass composition can comprise from 55 to 65 wt% $SiO_2$. In some embodiments, the glass composition can comprise from 40 to 70 wt%, 40 to 65 wt%, 40 to 60 wt%, 40 to 55 wt%, 40 to 50 wt%, 40 to 45 wt%, 50 to 70 wt%, 50 to 65 wt%, 50 to 60 wt%, 50 to 55 wt%, 55 to 70 wt%, 60 to 70 wt%, 65 to 70 wt%, 55 to 65 wt%, or 55 to 60 wt% $SiO_2$. In some embodiments, the glass composition can comprise from 0 to 45 wt%, 0 to 40 wt%, 0 to 35 wt%, 0 to 30 wt%, 0 to 25 wt%, 0 to 20 wt%, 0 to 15 wt%, 0 to 10 wt%, 0 to 5 wt%, 5 to 45 wt%, 5 to 40 wt%, 5 to 35 wt%, 5 to 30 wt%, 5 to 25 wt%, 5 to 20 wt%, 5 to 15 wt%, 5 to 10 wt%, 10 to 45 wt%, 10 to 40 wt%, 10 to 35 wt%, 10 to 25 wt%, 10 to 20 wt%, 10 to 15 wt%, 15 to 45 wt%, 15 to 40 wt%, 15 to 35 wt%, 15 to 30 wt%, 15 to 25 wt%, 15 to 20 wt%, 20 to 45 wt%, 20 to 45 wt%, 20 to 40 wt%, 20 to 35 wt%, 20 to 30 wt%, 20 to 25 wt%, 25 to 45 wt%, 25 to 40 wt%, 25 to 35 wt%, 25 to 30 wt%, 30 to 45 wt%, 30 to 40 wt%, 30 to 35 wt%, 35 to 45 wt%, 35 to 40 wt%, or 40 to 45 wt% $SiO_2$. In some embodiments, the glass composition comprises 0, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, or 70 wt% $SiO_2$.

Iron content in the silica may be a function of where the sand comes from - with particular locations having greater or lesser amounts of iron in the silica. In some embodiments, the silica used to form the high transmittance glass comprises from 0 ppm to 200 ppm $Fe_2O_3$. In some embodiments, the high transmittance glass comprises silica comprising 0.1, 0.5, 1, 2, 3, 4, 5, 10, 20, 30, 40, 50, 60, 70, 80, 90, 100, 120, 140, 160, 180, 200, or 250 ppm $Fe_2O_3$.

$Al_2O_3$ may provide for a) maintaining the lowest possible liquidus temperature, b) lowering the expansion coefficient, or c) enhancing the strain point. In some embodiments, the glass composition can comprise from 0 to 35 wt% $Al_2O_3$. In some embodiments, the glass composition can comprise from 0 to 30 wt% $Al_2O_3$. In some embodiments, the glass composition can comprise from 8 to 20 wt% $Al_2O_3$. In some embodiments, the glass composition can comprise from 5 to 15 wt% $Al_2O_3$. In some embodiments, the glass composition can comprise from 0 to 35 wt%, 0 to 30 wt%, 0 to 25 wt%, 0 to 20 wt%, 0 to 15 wt%, 0 to 10 wt%, 0 to 5 wt%, 5 to 35 wt%, 5 to 30 wt%, 5 to 25 wt%, 5 to 20 wt%, 5 to 15 wt%, 5 to 10 wt%, 10 to 35 wt%, 10 to 25 wt%, 10 to 20 wt%, 10 to 15 wt%, 15 to 35 wt%, 15 to 30 wt%, 15 to 25 wt%, 15 to 20 wt%, 20 to 35 wt%, 20 to 30 wt%, 20 to 25 wt%, 25 to 35 wt%, 25 to 30 wt%, or 30 to 35 wt% $Al_2O_3$. In some embodiments, the glass composition can comprise from 8 to 20 wt%, 8 to 18 wt%, 8 to 15 wt%, 8 to 12 wt%, 8 to 10 wt%, 10 to 20 wt%, 10 to 18 wt%, 10 to 15 wt%, 10 to 12 wt%, 12 to 20 wt%, 12 to 18 wt%, 12 to 15 wt%, 15 to 20 wt%, 15 to 18 wt%, or 18 to 20 wt% $Al_2O_3$. In some embodiments, the glass composition can comprise 0, 1, 2, 3, 4, 5, 6, 7, 8, 9, 10, 11, 12, 13, 14, 15, 16, 17, 18, 19, 20, 21,22, 23, 24, 25, 26, 27, 28, 29, 30, 31, 32, 33, 34, or 35 wt% $Al_2O_3$.

Alumina comprises over 10 wt% in the Examples below. In some embodiments, the high transmittance glass comprises alumina comprising from 0 to 400 ppm $Fe_2O_3$. In some embodiments, the high transmittance glass comprises alumina comprising 0.1, 0.5, 1, 2, 3, 4, 5, 10, 20, 30, 40, 50, 60, 70, 80, 90, 100, 120, 140, 160, 180, 200, 250, 300, 350, or 400 ppm $Fe_2O_3$.

MgO is effective in decreasing the viscosity of glass at a higher temperature and enhancing the viscosity of glass at a lower temperature, and may be used for the improvement of the melting property and enhancement of the strain point. However, if excessive amounts of MgO are used, there is an increasing trend toward phase separation and devitrification of the glass. In some embodiments, MgO can be added to the glass to reduce melting temperature, increase strain point, or adjust CTE when used in combination with other alkaline earth compounds (e.g., CaO, SrO, and BaO). In some embodiments, the glass can comprise 0 to 12 wt% MgO. In some embodiments, the glass composition can comprise greater than 0 to 5 wt% MgO. In some embodiments, the glass composition co can comprise greater than 0 to 5 wt% MgO. In some embodiments, the glass composition can comprise 0 to 12 wt%, 0 to 10 wt%, 0 to 8 wt%, 0 to 5 wt%, 0 to 4 wt%, 0 to 3 wt%, 0 to 2 wt%, 0 to 1 wt%, 1 to 12 wt%, 1 to 10 wt%, 1 to 8 wt%, 1 to 5 wt%, 1 to 4 wt%, 1 to 3 wt%, 1 to 2 wt%, 2 to 12 wt%, 2 to 10 wt%, 2 to 8 wt%, 2 to 5 wt%, 2 to 4 wt%, 2 to 3 wt%, 3 to 12 wt%, 3 to 10 wt%, 3 to 8 wt%, 3 to 5 wt%, 3 to 4 wt%, 4 to 12 wt%, 4 to 10 wt%, 4 to 8 wt, 4 to 5 wt%, 5 to 12 wt%, 4 to 10 wt%, 5 to 8 wt%, 8 to 12 wt%, 8 to 10 wt%, 10 to 12 wt% MgO. In some embodiments, the glass compositions can comprise 0, 1, 2, 3, 4, 5, 6, 7, 8, 9, 10, 11, or 12 wt% MgO.

While the MgO content in the examples is around 4 wt%, it can still be a substantial contributor to the overall iron levels because it can have significantly higher iron impurity levels than other batch materials. Commercially available MgO can exhibit an $Fe_2O_3$ content from 400 ppm to 1500 ppm, depending on manufacturer and location.

Additional components can be incorporated into the glass compositions to provide additional benefits. For example, additional components can be added as fining agents (e.g., to facilitate removal of gaseous inclusions from melted batch materials used to produce the glass) and/or for other purposes. In some embodiments, the glass may comprise one or more compounds useful as ultraviolet radiation absorbers. In some embodiments, the glass can comprise 3 wt% or less $TiO_2$, MnO, ZnO, $Nb_2O_5$, $MoO_3$, $Ta_2O_5$, $WO_3$, $ZrO_2$, $Y_2O_3$, $La_2O_3$, $HfO_2$, CdO, $SnO_2$, $Fe_2O_3$, $CeO_2$, $As_2O_3$, $Sb_2O_3$, Cl, Br, or combinations thereof. In some embodiments, the glass can comprise from 0 to 3 wt%, 0 to 2 wt%, 0 to 1 wt%, 0 to 0.5 wt%, 0 to 0.1 wt%, 0 to 0.05 wt%, or 0 to 0.01 wt% $TiO_2$, MnO, ZnO, $Nb_2O_5$, $MoO_3$, $Ta_2O_5$, $WO_3$, $ZrO_2$, $Y_2O_3$, $La_2O_3$, $HfO_2$, CdO, $SnO_2$, $Fe_2O_3$, $CeO_2$, $As_2O_3$, $Sb_2O_3$, Cl, Br, or combinations thereof. In some embodiments, the glass can comprise from 0 to 3 wt%, 0 to 2 wt%, 0 to 1 wt%, 0 to 0.5 wt%, 0 to 0.1 wt%, 0 to 0.05 wt%, or 0 to 0.01 wt% $TiO_2$, $CeO_2$, or $Fe_2O_3$, or combinations thereof.

The glass composition, according to some embodiments, (e.g., any of the glasses discussed above) can include F, Cl, or Br, for example, as in the case where the glasses comprise Cl and/or Br as fining agents or for shifting the $Fe^{2+}/Fe^{3+}$ ratio.

The high transmittance glass may generally be made of any suitable glass composition that can be formed into a thin planar sheet and that supports the transmission of light within its body without substantial loss due to scattering or absorption. In an embodiment, the high transmittance glass may be a chemically strengthened glass, such as a soda-lime-type glass. An example glass for the high transmittance glass is an alkali aluminosilicate glass hardened through ion exchange. These types of glass can comprise $Na_2O$ (soda), CaO (lime) and $SiO_2$ (silica), but can also include oxides such as MgO, $Li_2O$, $K_2O$, ZnO, and $ZrO_2$. Once hardened through ion exchange, these types of glass exhibit certain characteristics that make them desirable for touch screen applications, as well as other applications (e.g., as a cover glass). Further details as to the formulation or production, or both, of soda-lime-type glass suitable for use as the high transmittance glass may be found in one or more of U.S. Patent Application No. 11/888,213 filed July 31, 2007; U.S. Patent Application No. 12/537,393 filed August 7, 2009; U.S. Patent Application No. 12/545,475 filed August 21, 2009; and U.S. Patent Application No. 12/392,577 filed February 25, 2009. One possible embodied high transmittance glass is an ultralow-iron Gorilla Glass®, from Corning, Inc., Corning, NY. Glass compositions, such as low-iron Gorilla Glass® or other low-iron ion-exchanged glass, that may meet the high transmittance requirements the present disclosure and are described in U.S. Pat. No. 7,666,511, U.S. Publ. Nos. 2009/0202808, 2009/0215607, 2012/0159991, 2011/0045961, 2011/0294647, and U.S. Appl. Nos. 13/533,298, 13/408,169, 13/678,013, 13/417,835, and 13/677,805.

The high transmittance glass can be any thickness that is reasonably useful for embodiments described. However, it is often ideal to make the device as light as possible while still retaining structural rigidity. Additionally, use of thinner glass results in less light loss in transmission mode (i.e., light propagating orthogonally to the glass sheet). Glass sheet embodiments may have a thickness of 4 mm or less, 3 mm or less, 2.9 mm or less, 2.8 mm or less, 2.7 mm or less, 2.6 mm or less, 2.5 mm or less, 2.4 mm or less, 2.3 mm or less, 2.2 mm or less, 2.1 mm or less, 2.0 mm or less, 1.9 mm or less, 1.8 mm or less, 1.7 mm or less, 1.6 mm or less, 1.5 mm or less, 1.4 mm or less, 1.3 mm or less, 1.2 mm or less, 1.1 mm or less, 1.0 mm or less, 0.9 mm or less, 0.8 mm or less, 0.7 mm or less, 0.6 mm or less, 0.5 mm or less, 0.4 mm or less, 0.3 mm or less, 0.2 mm or less, 0.1 mm or less, 900 $\mu$m or less, 800 $\mu$m or less, 700 $\mu$m or less,

600 μm or less, 500 μm or less, 400 μm or less, 300 μm or less, 200 μm or less, 100 μm or less, 90 μm or less, 80 μm or less, 70 μm or less, 80 μm or less, 70 μm or less, 60 μm or less, or 50 μm or less.

The high transmittance glass, according to some embodiments, can be made via any appropriate glass-making process, such as float, fusion, or rolling. In some embodiments, the high transmittance glass can be down-drawable - that is, the glass is capable of being formed into sheets using down-draw methods such as, but not limited to, fusion draw and slot draw methods that are known to those skilled in the glass fabrication arts. Such down-draw processes are used in the large-scale manufacture of flat glass, for example, display glass or ion-exchangeable glass.

The fusion draw process uses an isopipe that has a channel for accepting molten glass raw material. The channel has weirs that are open at the top along the length of the channel on both sides of the channel. When the channel fills with molten material, the molten glass overflows the weirs. Due to gravity, the molten glass flows down the outside surfaces of the isopipe. These outside surfaces extend down and inwardly so that they join at an edge below the drawing tank. The two flowing glass surfaces join at this edge to fuse and form a single flowing sheet. The fusion draw method offers the advantage that, since the two glass films flowing over the channel fuse together, neither outside surface of the resulting glass sheet comes in contact with any part of the apparatus. Thus, the surface properties are not affected by such contact.

The slot draw method is distinct from the fusion draw method. Here the molten raw material glass is provided to a conduit. The bottom of the conduit has an open slot that is wider in one dimension than the other dimension with a nozzle that extends the length of the slot. The molten glass flows through the slot/nozzle and is drawn downward as a continuous sheet there through and into an annealing region. Compared to the fusion draw process, the slot draw process provides a thinner sheet, as only a single sheet is drawn through the slot, rather than two sheets being fused together, as in the fusion down-draw process.

Some aspects disclose a high optical transmittance glass having a sufficiently low absorption coefficient at the wavelength of light to allow for use of the glass in FTIR touch screen applications. In some embodiments, the absorption coefficient is less than 2.0 m$^{-1}$, 1.5 m$^{-1}$, 1.0 m$^{-1}$, or 0.5 m$^{-1}$ at 900 nm. In some aspects, the absorption coefficient is less than 2.0 m$^{-1}$, 1.5 m$^{-1}$, 1.0 m$^{-1}$, or 0.5 m$^{-1}$ from 400 to 800 nm. In some embodiments, the absorption coefficient is primarily a function of the iron content of the glass. In some aspects of the disclosure, the high transmittance glass comprises less than 200, 180, 160, 140, 120, 100, 80, 70, 60, 50, 40, 30, 20, or 10 ppm $Fe_2O_3$; and wherein the absorption coefficient of the glass is less than 2.0 m$^{-1}$, 1.5 m$^{-1}$, 1.0 m$^{-1}$, or 0.5 m$^{-1}$ at 900 nm; and wherein the absorption coefficient of the glass is less than 2.0 m$^{-1}$, 1.5 m$^{-1}$, 1.0 m$^{-1}$, or 0.5 m$^{-1}$ from 400 to 800 nm. In some embodiments, the glass comprises less than 100 ppm $Fe_2O_3$, wherein the absorption coefficient of the glass is less than 2.0 m$^{-1}$, 1.5 m$^{-1}$, 1.0 m$^{-1}$, or 0.5 m$^{-1}$ at 900 nm, and wherein the absorption coefficient of the glass is less than 2.0 m$^{-1}$, 1.5 m$^{-1}$, 1.0 m$^{-1}$, or 0.5 m$^{-1}$ from 400 to 800 nm.

In order to be compatible with down-draw processes, the high transmittance glass compositions described herein can have high liquidus viscosity. In some embodiments, the glass composition can have a liquidus viscosity of 10,000 poise or greater, 20,000 poise or greater, 30,000 poise or greater, 40,000 poise or greater, 50,000 poise or greater, 60,000 poise or greater, 70,000 poise or greater, 80,000 poise or greater, 90,000 poise or greater, 100,000 poise or greater, 110,000 poise or greater, 1200,000 poise or greater, 130,000 poise or greater, 140,000 poise or greater, 150,000 poise or greater, 160,000 poise or greater, 170,000 poise or greater, 180,000 poise or greater, 190,000 poise or greater, 200,000 poise or greater, 225,000 poise or greater, 250,000 poise or greater, 275,000 poise or greater, 300,000 poise or greater, 325,000 poise or greater, 350,000 poise or greater, 375,000 poise or greater, 400,000 poise or greater, 425,000 poise or greater, 450,000 poise or greater, 475,000 poise or greater, or 500,000 poise or greater.

In some embodiments, the glass composition can have a strain point of 500°C or greater, 510°C or greater, 520°C or greater, 530°C or greater, 540°C or greater, 550°C or greater, 560°C or greater, 570°C or greater, 580°C or greater, 590°C or greater, 600°C or greater, 610°C or greater, 620°C or greater, 630°C or greater, 640°C or greater, 650°C or greater, 660°C or greater, 670°C or greater, 680°C or greater, 690°C or greater, or 690°C or greater.

In some embodiments, the high transmittance glass can have a coefficient of thermal expansion of 25 x 10$^{-7}$ or greater, 26 x 10$^{-7}$ or greater, 27 x 10$^{-7}$ or greater, 28 x 10$^{-7}$ or greater, 29 x 10$^{-7}$ or greater, 30 x 10$^{-7}$ or greater, 31 x 10$^{-7}$ or greater, 32 x 10$^{-7}$ or greater, 33 x 10$^{-7}$ or greater, 34 x 10$^{-7}$ or greater, 35 x 10$^{-7}$ or greater, 36 x 10$^{-7}$ or greater, 37 x 10$^{-7}$ or greater, 38 x 10$^{-7}$ or greater, 39 x 10$^{-7}$ or greater, 40 x 10$^{-7}$ or greater, 41 x 10$^{-7}$ or greater, 42 x 10$^{-7}$ or greater, 43 x 10$^{-7}$ or greater, 44 x 10$^{-7}$ or greater, 45 x 10$^{-7}$ or greater, 46 x 10$^{-7}$ or greater, 47 x 10$^{-7}$ or greater, 48 x 10$^{-7}$ or greater, 49 x 10$^{-7}$ or greater, 50 x 10$^{-7}$ or greater, 51 x 10$^{-7}$ or greater, 52 x 10$^{-7}$ or greater, 53 x 10$^{-7}$ or greater, 54 x 10$^{-7}$ or greater, 55 x 10$^{-7}$ or greater, 56 x 10$^{-7}$ or greater, 57 x 10$^{-7}$ or greater, 58 x 10$^{-7}$ or greater, 59 x 10$^{-7}$ or greater, 60 x 10$^{-7}$ or greater, 61 x 10$^{-7}$ or greater, 62 x 10$^{-7}$ or greater, 63 x 10$^{-7}$ or greater, 64 x 10$^{-7}$ or greater, 65 x 10$^{-7}$ or greater, 66 x 10$^{-7}$ or greater, 67 x 10$^{-7}$ or greater, 68 x 10$^{-7}$ or greater, 69 x 10$^{-7}$ or greater, 70 x 10$^{-7}$ or greater, 71 x 10$^{-7}$ or greater, 72 x 10$^{-7}$ or greater, 73 x 10$^{-7}$ or greater, 74 x 10$^{-7}$ or greater, 75 x 10$^{-7}$ or greater, 76 x 10$^{-7}$ or greater, 77 x 10$^{-7}$ or greater, 78 x 10$^{-7}$ or greater, 79 x 10$^{-7}$ or greater, 80 x 10$^{-7}$ or greater, 81 x 10$^{-7}$ or greater, 82 x 10$^{-7}$ or greater, 83 x 10$^{-7}$ or greater, 84 x 10$^{-7}$ or greater, 85 x 10$^{-7}$ or greater, 86 x 10$^{-7}$ or greater, 87 x 10$^{-7}$ or greater, 88 x 10$^{-7}$ or greater, 89 x 10$^{-7}$ or greater, or 90 x 10$^{-7}$ or greater.

In some embodiments, the high transmittance glass can be characterized as having strain points $\geq 540°C$, thermal expansion coefficient of from 6.5 to 10.5 ppm/°C, as well as having liquidus viscosities in excess of 50,000 poise. As such they are ideally suited for being formed into sheet by the fusion process.

Alternatively, the high transmittance glass may be formed via float or rolling processes known in the art $\beta$-OH, as used herein, is a measure of the hydroxyl content in the glass as measured by infrared spectroscopy, and is determined using the fundamental hydroxyl absorption for the glass. (U.S. Pat. No. 6, 128,924). $\beta$-OH is one way of measuring the water content in the glass. Water content can play a role in glass composition characteristics as well as possibly influencing device performance. In some embodiments, the high transmittance glass comprises a $\beta$-OH value of from 0.1 to 1, 0.1 to 0.9, 0.1 to 0.8, 0.1 to 0.7, 0.1 to 0.6, 0.1 to 0.5, 0.1 to 0.4, 0.1 to 0.3, 0.1 to 0.2, 0.2 to 0.10, 0.2 to 0.9, 0.2 to 0.8, 0.2 to 0.7, 0.2 to 0.6, 0.2 to 0.5, 0.2 to 0.4, 0.2 to 0.3, 0.3 to 1, 0.3 to 0.9, 0.3 to 0.8, 0.3 to 0.7, 0.3 to 0.6, 0.3 to 0.5, 0.3 to 0.4, 0.4 to 1, 0.4 to 0.9, 0.4 to 0.8, 0.4 to 0.7, 0.4 to 0.6, 0.4 to 0.5, 0.5 to 1, 0.5 to 0.9, 0.5 to 0.5, 0.5 to 0.7, 0.5 to 0.6, 0.6 to 1, 0.6 to 0.9, 0.6 to 0.8, 0.6 to 0.7, 0.7 to 1, 0.7 to 0.9, 0.7 to 0.8, 0.8 to 1, 0.8 to 0.9, or 0.9 to 1. In some embodiments, the $\beta$-OH value is 0.1, 0.2, 0.3, 0.4, 0.5, 0.6, 0.7, 0.8, 0.9, or 1.

In another aspect of the high transmittance glass listed herein, the glass sheet has an average surface roughness $(R_a)$ of $\leq 20$ Å, preferably $\leq 10$ Å, wherein the glass sheet has not been polished. In another aspect of the high transmittance glass listed herein, the glass substrate has a thickness below 3 mm, and the glass substrate has a curvature deformation, W, less than 0.5 micrometer/cm$^2$, as described by the equation $W=D/L^2$, wherein D is the maximum curvature of glass substrate in $\mu$m and L is the diagonal length of glass substrate in cm.

The high transmittance glass for touch-sensitive display may be used alone or in combination with a conventional capacitive touch display. The touch-sensitive display may include a bezel that can reside atop the surface of transparent sheet along the edges. The touch-screen system can be operably arranged atop a display and in an example includes a chassis that supports the various components making up the touch-screen system.

Additional components that may be incorporated into a touch sensitive device include, but are not limited to, a backlight, a thin-film transistor (TFT) glass layer, a liquid crystal layer, a frame, circuitry, a color filter glass layer, integrated circuits, and a top polarizer layer.

Another aspect of the disclosure comprises methods of determining the transmittance of glass for use in touch screen applications. The establishment of quality control protocols is important for producing high transmittance products, whether that transmittance is obtained via reduction of imperfections or reduction of light-absorbing compounds. In some embodiments, monitoring is done for glasses to be used in FTIR wherein the wavelength of light used is in the range of 750-2500 nm. In such embodiments, one method for monitoring the attenuation is to measure the concentration of $Fe_2O_3$. In some embodiments, it is likely that the desired property will be optical absorption for a given wavelength, but this is more difficult to measure than the total concentration of $Fe_2O_3$. As previously discussed, the absorption coefficient depends on both the amount of iron present, as well as the redox state. If it is assumed that the latter remains constant, then periodic testing for overall iron content should be sufficient. In some embodiments, X-ray fluorescence (XRF) can be used to measure glass samples from the fusion draw machine. This measurement can provide results accurate to the nearest 10 ppm. If greater resolution is required, an approach like inductively coupled plasma mass spectrometry (ICP-MS) can be used. As new compositions of glass are introduced, careful analysis of the effect on overall iron content and oxidation state will be required.

## EXAMPLES

The absorption coefficient ($\alpha$) measurements are performed on samples produced on research melters as well as crucible melts. The samples were either "typical" Gorilla compositions, or low-Fe variants, which essentially used cleaner batch materials. Specific batch details are listed in Table 1:

**Table 1**

| Batch Material | Sample A | Sample B | Sample C | Sample D | Sample E | Sample F | Sample G |
|---|---|---|---|---|---|---|---|
| Silica - photonics grade | | | | | | | 7917.61 |
| Silica - (Tasmania, grade 3575) | 556.65 | 0 | 0 | 556.69 | 0 | 0 | |
| Silica - QP100 (CGG) | 0 | 556.65 | 0 | 0 | 556.65 | 0 | |
| Silica - QP200 (Mintec) | 0 | 0 | 556.65 | 0 | 0 | 556.65 | |
| Alumina - (Sumitomo) | | | | | | | 1651.48 |
| Alumina - (calcined) | 0 | 0 | 0 | 123.44 | 123.44 | 123.44 | |
| Alumina - (calcined, AC-715) | 123.44 | 123.44 | 123.44 | 0.00 | 0.00 | 0.00 | |

(continued)

| Batch Material | Sample A | Sample B | Sample C | Sample D | Sample E | Sample F | Sample G |
|---|---|---|---|---|---|---|---|
| Soda Ash | 202.42 | 202.43 | 202.43 | 202.24 | 202.25 | 202.25 | 2832.93 |
| Sodium nitrate - (industrial) | 12.37 | 12.37 | 12.37 | 12.37 | 12.37 | 12.37 | |
| Sodium chloride | | | | | | | 113.27 |
| Potassium nitrate | | | | | | | 443.58 |
| Potassium Carbonate-dry | 22.88 | 22.88 | 22.88 | 22.88 | 22.88 | 22.88 | |
| Magnesium oxide - (Kyowa) | 38.10 | 38.10 | 38.10 | 38.10 | 38.10 | 38.10 | |
| Magnesium oxide - (Penoles) | | | | | | | 455.75 |
| Limestone - (Sibelco Bao Lin) | 7.23 | 7.23 | 7.23 | 7.19 | 7.19 | 7.19 | 82.29 |
| Tin (IV) oxide | 39.87 | 39.87 | 39.87 | 39.87 | 39.87 | 39.87 | |
| Zirconium silicate | | | | | | | 7.21 |
| **Total (g)** | **1002.96** | **1002.97** | **1002.97** | **1002.78** | **1002.75** | **1002.75** | **13504.12** |

Two different methods were used, one for measuring attenuation due to the material's intrinsic optical absorption ($\alpha$) for 250 to 2500 nm wavelengths, and one for measuring total optical attenuation in the waveguide configuration ($\alpha_{wg}$) for 850 nm infrared light.

*Absorption Coefficient Measurements*

Absorption coefficient measurements are performed for the melt samples, including "typical" and low-Fe variations of Gorilla Glass®. The submitted samples consist of 10 mm x 20 mm x 50 mm cuboids having all sides polished. Prior to measurement, sample surfaces are cleaned using a Texwipe® TX-609 wiper dampened with HPLC grade reagent alcohol. The samples are measured using a Hitachi spectrophotometer with 60 mm diameter integrating sphere detector. Measurements are made for the 250 - 2500 nm wavelength range for each of the three sample path lengths, allowing calculation of the absorption coefficient for each glass.

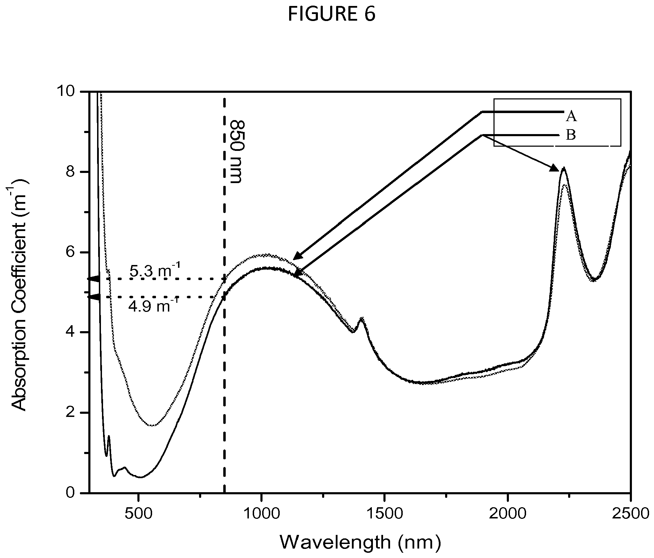

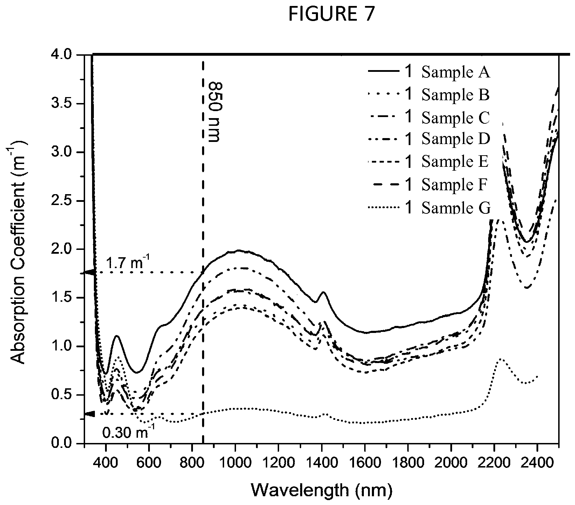

FIGURE 6 below shows typical results for two "typical" variations of Gorilla Glass® (denoted as "A" and "B"). The results clearly show broadband absorption at ~1000 nm due to the presence of $Fe^{2+}$ in these samples. FIGURE 7 shows the resulting absorption coefficient for a number of samples where the Fe content is controlled by use of higher purity batch materials. As shown in the figure, a subsequent decrease in IR absorption is observed for each of these variations, with Sample G exhibiting the greatest decrease, showing a 94% reduction in the absorption coefficient at 850 nm. This batch, however, is composed of source materials such as IOTA-6, a photonics grade sand, as compared to the commercial grade sands used in Samples A-F.

*Waveguide Attenuation Coefficient Measurements*

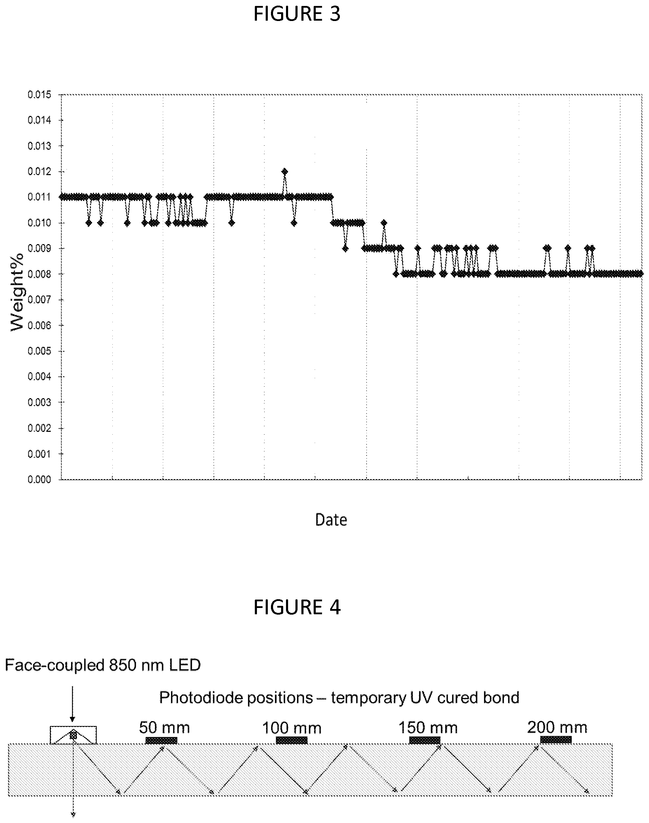

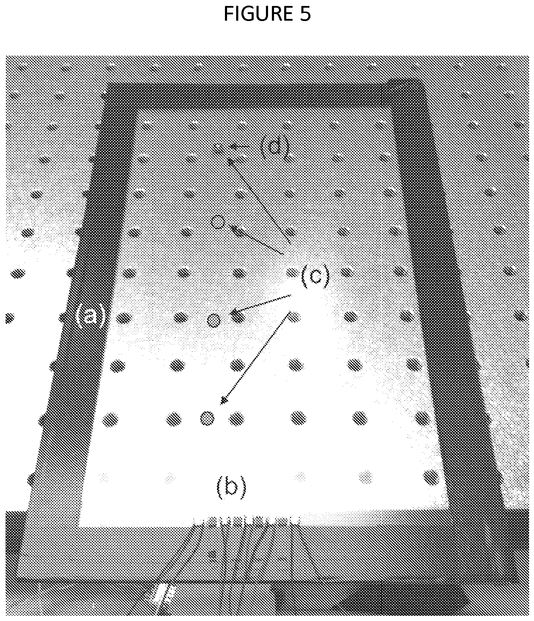

The $\alpha_{wg}$ measurements were performed at 850 nm as described in FIGURE 4. An infrared LED is used to launch light into a sheet of transparent material, and a photodiode is used to measure the light intensity at a series of points along a straight line at several different distances from the LED. FIGURE 5 shows a typical measurement setup. Prior to the measurements, the edges and a portion of the face near the perimeter of the sheet are covered with black electrical tape. The purpose of this tape is to minimize reflections of the light off the edges. The measurement technique is sensitive to stray light, so efforts were taken to eliminate this, including thorough surface cleaning in addition to the previously mentioned black tape. An 850 nm LED is bonded using either epoxy or UV curable optical adhesive to the surface of the sheet to be measured (FIGURE 5 shows 5 different LEDs because, in this case, multiple wavelengths were measured). In this configuration, light emitted from the LED at angles greater than 41.8° from the normal axis of the LED is captured by the sheet. The LED is driven using a Thorlabs LDC200 laser diode current controller, rated at 100 mA. An Agilent 81150A arbitrary waveform generator is used to trigger the LDC200 with a 1 kHz square wave. The optical intensity in the slab at different ranges is measured using a Vishay Semiconductor TEMD5110X01 silicon photodiode with a square-shaped 7.5 $mm^2$ radiant sensitive area and an integrated daylight-blocking filter. The photodiode is temporarily bonded to the surface of the sheet using UV curable optical adhesive. After each measurement, the photodiode is removed with a razor blade and moved to a location farther from the LED, as illustrated in the figure.

Calculation of the absorption coefficient is accomplished by plotting x (the range) versus ln(x(I(x))), where I(x) is the measured photocurrent for each range. The resulting trace is linear, the slope of which is $\alpha_{wg}$.

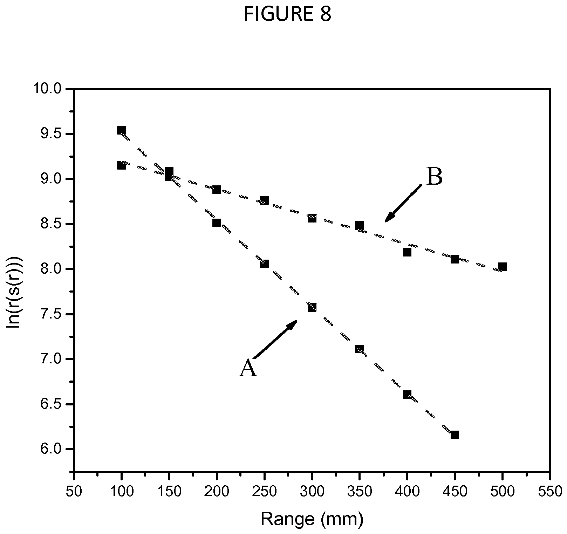

Measurements from typical samples are presented in FIGURE 8, below, showing absorbance data at 850 nm for 1.1 mm thick Gorilla® and 0.7 mm thick low-Fe Gorilla®. Table 2 summarizes the results from all measurements in this study.

**Table 2. Summary of Waveguide Attenuation Coefficient Measurements**

|  | Material | Type/Source | Thickness (mm) | $\alpha_{wg}$ (m$^{-1}$) |
|---|---|---|---|---|
| Corning Glasses | Gorilla® | Low Fe | 0.7 | 3.0 |
|  | Gorilla® | Normal | 0.55 | 8.7 |
|  | Gorilla® | Normal | 1.1 | 9.6 |
|  | EagleXG® | Normal | 0.7 | 6.5 |
| Other Glasses | Borofloat®33 | Schott | 1.1 | 3.4 |
|  | Starphire® Low-Fe SLG | PPG | 6.35 | 11.0 |
| Polymers | Makrolon® Polycarbonate | Bayer Material Science | 1.46 | 1.8 |
|  | Acrylic | McMaster-Carr | 1.0 | 3.3 |

The $Fe_2O_3$ level in the 0.7 mm thick low-Fe Gorilla® in Table 2 was determined to be 80 ppm (see also, FIGURE 3). For comparison, $\alpha_{wg}$ was measured for several other materials, including EagleXG®, "low Fe" soda lime (PPG Starphire®), Schott Borofloat® 33, acrylic (McMaster-Carr), and polycarbonate (Bayer). Comparatively, the lowest iron containing sample, Sample G, contained 26 ppm iron, as measured by ICP-MS, which equates to an $Fe_2O_3$ concentration of 13 ppm (it's standard internal practice to report total Fe content as $[Fe_2O_2]$). In addition to cleaner batch material, this particular melt also had the addition of NaCl as a fining agent.

The results of the low-Fe melts indicate that at least a 3x reduction in the IR absorption in Gorilla® (over "typical" levels) is attainable. In addition, Sample G proved that it is possible to drive the iron content and $\alpha$ to quite low levels, but at an increase in raw materials cost. The additional measurements show that materials, such as PPG's Starphire®, actually exhibit IR absorption too high for use in FTIR applications.

**Claims**

1. An electronic device utilizing a frustrated total internal reflection system to determine a touch event and comprising high optical transmittance glass comprising:

   a. less than 10 imperfections per cm$^3$, wherein

      i. the imperfection comprises an inclusion or bubble; and
      ii. the size of the imperfection is less than 100 $\mu$m along the axis of the longest dimension of the imperfection; or

   b. less than 200 ppm $Fe_2O_3$; and
   c. the absorption coefficient of the glass is less than 2.0 m$^{-1}$ at 900 nm; and
   d. the absorption coefficient of the glass is less than 2.0 m$^{-1}$ from 400 to 800 nm.

2. The electronic device of claim 1, wherein the glass comprises less than 100 ppm $Fe_2O_3$ or less than 1 imperfection per cm$^3$.

3. The electronic device of claim 1 or claim 2, wherein the absorption coefficient of the glass is less than 1.0 m$^{-1}$ at 900 nm.

4. The electronic device of any of claims 1-3, wherein the absorption coefficient of the glass is less than 1.0 m$^{-1}$ from 400 to 800 nm.

5. The electronic device of any of claims 1-4, wherein the glass has a density of 2.45 g/cm$^3$ or greater.

**6.** The electronic device of claim 1, wherein the glass is ion exchanged.

**7.** The electronic device of claim 6, wherein the glass has fracture toughness of 0.7 MPa m$^{1/2}$ or greater or a has Vickers hardness under 200 g load of 600 kgf/mm$^2$ or greater.

**8.** The electronic device of claim 6 or claim 7, wherein the glass has a compressive stress of 600 MPa or greater or a shear modulus 30 GPa or greater.

**9.** The electronic device of any of claims 6-8, wherein the glass has a depth of layer of 10 $\mu$m or greater.

**10.** The electronic device of any of claims 1-9, wherein the glass has a $\beta$-OH value of from 0.2 mm$^{-1}$ to 0.9 mm$^{-1}$.

**11.** The electronic device of any of claims 1-10, wherein the glass has an average surface roughness (R$_a$) of $\leq$20 Å, preferably $\leq$10 Å, wherein the glass sheet has not been polished.

**12.** The electronic device of any of claims 1-11, wherein the glass has a thickness below 3 mm, and the glass substrate has a curvature deformation, W, less than 0.5 micrometer/cm$^2$, as described by the equation W=D/L$^2$, wherein D is the maximum curvature of glass substrate in mm and L is the diagonal length of glass substrate in cm.

**13.** The electronic device of any of claims 1 to 12, wherein the frustrated total internal reflection system is able to determine single or multiple touch positions, touch pressure, or all of the above.


**Patentansprüche**

**1.** Elektronische Vorrichtung, die ein frustriertes Totalreflexionssystem zur Bestimmung eines Berührungsereignisses verwendet und Glas mit hoher optischer Durchlässigkeit umfasst, umfassend:

a) weniger als 10 Imperfektionen je cm$^3$, wobei

i) die Imperfektion einen Einschluss oder eine Blase umfasst; und
ii) die Größe der Imperfektion entlang der Achse der längsten Abmessung der Imperfektion kleiner ist als 100 $\mu$m; oder

b) weniger als 200 ppm Fe$_2$O$_3$; und
c) einen Absorptionskoeffizienten des Glases von weniger als 2,0 m$^{-1}$ bei 900 nm; und
d) einen Absorptionskoeffizienten des Glases von weniger als 2,0 m$^{-1}$ von 400 bis 800 nm.

**2.** Elektronische Vorrichtung nach Anspruch 1, wobei das Glas weniger als 100 ppm Fe$_2$O$_3$ oder weniger als 1 Imperfektion je cm$^3$ umfasst.

**3.** Elektronische Vorrichtung nach Anspruch 1 oder 2, wobei der Absorptionskoeffizient des Glases kleiner ist als 1,0 m$^{-1}$ bei 900 nm.

**4.** Elektronische Vorrichtung nach einem der Ansprüche 1 bis 3, wobei der Absorptionskoeffizient des Glases kleiner ist als 1,0 m$^{-1}$ von 400 bis 800 nm.

**5.** Elektronische Vorrichtung nach einem der Ansprüche 1 bis 4, wobei das Glas eine Dichte von 2,45 g/cm$^3$ oder höher aufweist.

**6.** Elektronische Vorrichtung nach Anspruch 1, wobei das Glas ionenausgetauscht ist.

**7.** Elektronische Vorrichtung nach Anspruch 6, wobei das Glas eine Bruchzähigkeit von 0,7 MPa m$^{1/2}$ oder höher oder unter einer Last von 200 g eine Vickershärte von 600 kgf/mm$^2$ oder mehr aufweist.

**8.** Elektronische Vorrichtung nach Anspruch 6 oder 7, wobei das Glas eine Druckfestigkeit von 600 MPa oder höher oder einen Schermodul von 30 GPa oder höher aufweist.

**9.** Elektronische Vorrichtung nach einem der Ansprüche 6 bis 8, wobei das Glas eine Schichttiefe von 10 $\mu$m oder mehr aufweist.

**10.** Elektronische Vorrichtung nach einem der Ansprüche 1 bis 9, wobei das Glas einen $\beta$-OH-Wert zwischen 0,2 mm$^{-1}$ bis 0,9 mm$^{-1}$ aufweist.

**11.** Elektronische Vorrichtung nach einem der Ansprüche 1 bis 10, wobei das Glas eine gemittelte Rautiefe ($R_a$) von $\leq$ 20 Å, vorzugsweise von $\leq$ 10 Å aufweist, die Glasscheibe nicht poliert ist.

**12.** Elektronische Vorrichtung nach einem der Ansprüche 1 bis 11, wobei das Glas eine Dicke von weniger als 3 mm aufweist, und wobei das Glassubstrat eine Krümmungsverformung W von weniger als 0,5 Mikrometer/cm$^2$ gemäß der Gleichung W=D/L$^2$ aufweist, wobei D die maximale Krümmung des Glassubstrats in mm ist, und wobei L die diagonale Länge des Glassubstrats in cm ist.

**13.** Elektronische Vorrichtung nach einem der Ansprüche 1 bis 12, wobei das frustrierte Totalreflexionssystem einzelne oder mehrere Berührungspositionen, Berührungsdruck oder alles Vorstehende bestimmen kann.


**Revendications**

**1.** Dispositif électronique utilisant un système de réflexion interne totale neutralisée pour déterminer un événement tactile et comprenant un verre à transmission optique élevée comprenant :

    a. moins de 10 imperfections par cm$^3$,

        i. l'imperfection comprenant une inclusion ou une bulle ; et
        ii. la taille de l'imperfection étant inférieure à 100 $\mu$m le long de l'axe de la dimension la plus longue de l'imperfection ; ou

    b. moins de 200 ppm de Fe$_2$O$_3$ ; et
    c. le coefficient d'absorption du verre étant inférieur à 2,0 m$^{-1}$ à 900 nm ; et
    d. le coefficient d'absorption du verre étant inférieur à 2,0 m$^{-1}$ de 400 à 800 nm.

**2.** Dispositif électronique selon la revendication 1, le verre comprenant moins de 100 ppm de Fe$_2$O$_3$ ou moins de 1 imperfection par cm$^3$.

**3.** Dispositif électronique selon la revendication 1 ou 2, le coefficient d'absorption du verre étant inférieur à 1,0 m$^{-1}$ à 900 nm.

**4.** Dispositif électronique selon l'une quelconque des revendications 1 à 3, le coefficient d'absorption du verre étant inférieur à 1,0 m$^{-1}$ de 400 à 800 nm.

**5.** Dispositif électronique selon l'une quelconque des revendications 1 à 4, le verre ayant une densité de 2,45 g/cm$^3$ ou plus.

**6.** Dispositif électronique selon la revendication 1, le verre étant à échange d'ions.

**7.** Dispositif électronique selon la revendication 6, le verre ayant une ténacité de 0,7 MPa m$^{1/2}$ ou plus ou ayant une dureté Vickers sous charge de 200 g de 600 kgf/mm$^2$ ou plus.

**8.** Dispositif électronique selon la revendication 6 ou 7, le verre ayant une contrainte de compression de 600 MPa ou plus ou un module de cisaillement de 30 GPa ou plus.

**9.** Dispositif électronique selon l'une quelconque des revendications 6 à 8, le verre ayant une profondeur de couche de 10 $\mu$m ou plus.

**10.** Dispositif électronique selon l'une quelconque des revendications 1 à 9, le verre ayant une valeur $\beta$-OH comprise entre 0,2 mm$^{-1}$ et 0,9 mm$^{-1}$.

**11.** Dispositif électronique selon l'une quelconque des revendications 1 à 10, le verre ayant une rugosité de surface moyenne ($R_a$) de $\leq$20 Å, de préférence $\leq$10 Å, la feuille de verre n'ayant pas été polie.

**12.** Dispositif électronique selon l'une quelconque des revendications 1 à 11, le verre ayant une épaisseur inférieure à 3 mm et le substrat de verre ayant une déformation de courbure, W, inférieure à 0,5 micromètre/cm$^2$, comme décrit par l'équation W=D/L$^2$, où D est la courbure maximale du substrat de verre en mm et L est la longueur diagonale du substrat de verre en cm.

**13.** Dispositif électronique selon l'une quelconque des revendications 1 à 12, le système de réflexion interne totale neutralisée pouvant déterminer une position de contact unique ou multiple, une pression de contact et/ou tout ce qui précède.

FIGURE 1

FIGURE 2

FIGURE 3

Date

FIGURE 4

Face-coupled 850 nm LED

Photodiode positions – temporary UV cured bond

50 mm      100 mm      150 mm      200 mm

FIGURE 5

FIGURE 6

FIGURE 7

FIGURE 8

FIGURE 9

FIGURE 10

FIGURE 11

FIGURE 12

FIGURE 13

FIGURE 14

FIGURE 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110122091 A1
- US 686571 A
- US 13686426 B
- US 61744878 A
- US 61640605 B
- US 61640605 A
- US 88821307 A
- US 53739309 A
- US 54547509 A
- US 39257709 A
- US 7666511 B
- US 20090202808 A
- US 20090215607 A
- US 20120159991 A
- US 20110045961 A
- US 20110294647 A
- US 533298 A
- US 13408169 B
- US 13678013 B
- US 13417835 B
- US 13677805 B
- US 6128924 A

**Non-patent literature cited in the description**

- **D.W. SHEIBLEY ; M.H. FOWLER.** *NASA Technical Note D-3750, Lewis Research Center,* December 1966